# EUROPEAN PATENT APPLICATION

(11) **EP 3 865 210 A1**
(43) Date of publication of application: **18.08.2021**
(21) Application number: 20157398.7
(22) Date of filing: 14.02.2020
(51) Int. Cl.: B01J 23/755, B01J 35/10, B01J 37/03, B01J 37/18, C10G 45/48, C08F 8/04

(54) **ALUMINIUM-SILICON-SUPPORTED NICKEL-BASED CATALYST, ITS PRECURSOR WITH HIGH TOTAL INTRUSION VOLUME, THEIR PREPARATION PROCESSES, AND PROCESS FOR HYDROGENATION OF PETROCHEMICAL RESINS USING SAID CATALYST**

(71) Applicant: BASF Corporation, Florham Park, NJ 07932 (US)
(72) Inventor: Yarulina, Irina, 3011 TA Rotterdam (NL); Gosselink, Rob, 3521 AV Utrecht (NL); Kamsma, Gerda, 3437 GP Nieuwegein (NL); Reesink, Bernard, 7107 AD Winterswijk-Kotten (NL); Terorde, Robert, 3951 AE Maarn (NL)
(74) Representative: Altmann Stößel Dick Patentanwälte PartG mbB

(57) **Abstract**

The present invention relates to a supported nickel catalyst precursor comprising Ni, Si, Al, and O, wherein the catalyst precursor displays a specific total intrusion volume determined via Hg intrusion. Further, the present invention relates to a process for preparing said catalyst precursor. Yet further, the present invention relates to a supported nickel catalyst prepared from the said catalyst precursor. In addition thereto, the present invention relates to a use thereof in a hydrogenation reaction of aromatic compounds.

## Description

### TECHNICAL FIELD

The present invention relates to a supported nickel catalyst and its precursor comprising Ni, Si, Al, and O, wherein the catalyst precursor displays a specific total intrusion volume determined via Hg intrusion. Further, the present invention relates to a process for preparing said catalyst and its precursor and a use thereof in a hydrogenation reaction of aromatic compounds.

### INTRODUCTION

Petrochemical resins find their applications in the field of adhesives (in particular non-wovens, coating, and construction). Petrochemical resins are produced by the polymerization of the C9 fraction upon distillation of the feed obtained from naphtha cracking. The resulting aromatic polymers are however relatively unstable to thermal and oxidative conditions, which will result in degradation, thereby reducing their adhesive performance. In order to overcome the instability of the C9 resin, a hydrogenation is normally performed. As such, the double bonds, the reason for the thermal and oxidative instability, are removed.

As regards the catalysts which are typically employed in the hydrogenation, these usually comprise nickel as the catalytically active component. In order to obtain a highly dispersed catalyst, the active metal catalyst is typically supported on an oxidic carrier such as on a combined SiO₂-Al₂O₃ support.

WO 01/36093 A1 relates to a catalyst for the hydrogenation of hydrocarbon resins comprising an iron containing nickel catalyst supported on silica and alumina. WO 2004/035204 A1 concerns a catalyst for hydrogenation reactions, wherein the catalyst comprises nickel, silica, alumina, and magnesium. US 9,045,410 B2 relates to a catalyst comprising nickel and a solid silica support, wherein the catalyst is employed for the hydrogenation of an unsaturated fatty material. WO 2015/008247 A2 concerns a process and a catalyst for the hydrogenation of resins, wherein the catalyst comprises cobalt promoted nickel supported on silica-alumina.

Despite the achievements made for providing effective hydrogenation catalysts, in particular for the hydrogenation of petrochemical resins, there remains a need for catalysts of yet better performance, in particular with regard to their activity in the hydrogenation reaction.

### DETAILED DESCRIPTION

It was the object of the present invention to provide an improved hydrogenation catalyst, in particular with regard to its catalytic activity, as well as to provide a process for the production of such an improved hydrogenation catalyst. Thus, it has surprisingly been found that the inventive process allows for the production of a hydrogenation catalyst with a greatly improved activity, in particular in the hydrogenation of petrochemical resins. In particular, it has unexpectedly been found that the inventive process allows for the production of a hydrogenation catalyst displaying a specific porosity leading to the surprisingly improved activity in hydrogenation. More specifically, it has surprisingly been found that the inventive process leads to a substantially higher mesoporosity of the resulting material, affording the unexpected increase in activity of the inventive catalyst compared to catalyst materials known in the art.

Therefore, the present invention relates to a supported nickel catalyst precursor comprising Ni, Si, Al, and O, preferably obtainable and/or obtained according to the process of any one of the embodiments disclosed herein, wherein the catalyst precursor displays a total intrusion volume in the range of from 2.5 to 6.5 ml/g, preferably of from 3 to 5.5 ml/g, more preferably of from 3.5 to 5 ml/g, more preferably of from 3.7 to 4.7 ml/g, more preferably of from 3.8 to 4.5 ml/g, more preferably of from 3.9 to 4.3 ml/g, and more preferably of from 4 to 4.2 ml/g. It is preferred that the total intrusion volume is determined according to Reference Example 1.

It is preferred that the catalyst precursor displays a total pore volume in the range of from 0.5 to 2 cm³/g, more preferably of from 0.6 to 1.8 cm³/g, more preferably of from 0.65 to 1.5 cm³/g, more preferably of from 0.7 to 1.3 cm³/g, more preferably of from 0.75 to 1.1 cm³/g, more preferably of from 0.8 to 1 cm³/g, more preferably of from 0.85 to 0.95 cm³/g, and more preferably of from 0.9 to 0.92 cm³/g. It is preferred that the total pore volume is determined according to Reference Example 2.

It is preferred that the cumulative pore volume of the catalyst precursor for pore diameters of from 2 to 5 nm is in the range of from 0.1 to 0.5 cm³/g, more preferably of from 0.13 to 0.4 cm³/g, more preferably of from 0.15 to 0.35 cm³/g, more preferably of from 0.18 to 0.32 cm³/g, more preferably of from 0.2 to 0.29 cm³/g, more preferably of from 0.22 to 0.27 cm³/g, and more preferably of from 0.24 to 0.25 cm³/g. It is preferred that the cumulative pore volume is determined according to Reference Example 2.

It is preferred that the cumulative pore volume of the catalyst precursor for pore diameters of from 2 to 60 nm is in the range of from 0.3 to 1.5, more preferably of from 0.5 to 1.2, more preferably of from 0.55 to 1, more preferably of from 0.6 to 0.9, more preferably of from 0.65 to 0.85, more preferably of from 0.7 to 0.8, and more preferably of from 0.73 to 0.77. It is preferred that the cumulative pore volume is determined according to Reference Example 2.

It is preferred that the cumulative pore volume of the catalyst precursor for pore diameters of from 20 to 80 nm is in the range of from 0.15 to 0.7, more preferably of from 0.18 to 0.55, more preferably of from 0.2 to 0.45, more preferably of from 0.23 to 0.4, more preferably of from 0.25 to 0.38, more preferably of from 0.28 to 0.35, and more preferably of from 0.31 to 0.33. It is preferred that the cumulative pore volume is determined according to Reference Example 2.

It is preferred that the BET surface area of the catalyst precursor is in the range of from 200 to 350 m²/g, more preferably of from 230 to 320 m²/g, more preferably of from 250 to 300 m²/g, more preferably of from 260 to 285 m²/g, and more preferably of from 265 to 280 m²/g. It is preferred that the BET surface area is preferably determined according to ISO 9277:2010.

Further, the present invention relates to a process for the preparation of a supported nickel catalyst precursor comprising
(1) preparing a first aqueous solution (S1) comprising one or more bases;
(2) preparing a second aqueous solution (S2) comprising one or more nickel containing compounds and one or more aluminum containing compounds;
(3) preparing a third aqueous solution (S3) comprising one or more silicon containing compounds;
(4) optionally preparing a fourth aqueous solution (S4) comprising one or more aluminum containing compounds;
(5) feeding solutions S2 and S3 and optional solution S4 into solution S1 for precipitating the supported nickel catalyst precursor, wherein the resulting mixture has a pH in the range of from 6.5 to 8.5;
(6) isolating the supported nickel catalyst precursor from the mixture obtained in (5).

It is preferred that the pH of the mixture resulting in (5) is in the range of from 6.9 to 8.1, more preferably of from 7.1 to 7.9, more preferably of from 7.3 to 7.8, and more preferably of from 7.4 to 7.7.

It is preferred that the one or more bases in (1) are selected from the group consisting of inorganic and organic bases, preferably from the group of inorganic bases, wherein preferably the one or more bases are selected from the group consisting of hydroxides, carbonates, aluminates, and mixtures of two or more thereof,
more preferably from the group consisting of alkali metal hydroxides, alkali metal carbonates, alkali metal aluminates, and mixtures of two or more thereof,
more preferably from the group consisting of alkali metal carbonates, alkali metal aluminates, and mixtures of two or more thereof,
wherein the alkali metal is preferably selected from the group consisting of Li, Na, K, Rb, Cs, and mixtures of two or more thereof,
more preferably from the group consisting of Li, Na, K, and mixtures of two or more thereof, wherein more preferably the alkali metal is Na and/or K, preferably Na,
and wherein more preferably the one or more bases comprise sodium carbonate and/or sodium aluminate, preferably sodium carbonate, wherein more preferably the one or more bases are sodium carbonate and/or sodium aluminate, preferably sodium carbonate.

It is preferred that the one or more bases comprise one or more polybasic salts, preferably one or more polybasic salts selected from the group consisting of dibasic, tribasic, and tetrabasic salts, including mixtures of two or more thereof, more preferably from the group consisting of dibasic and tribasic salts, including mixtures of two or more thereof, wherein more preferably the one or more bases comprise one or more dibasic and/or one or more tribasic salts, and more preferably one or more dibasic salts, wherein more preferably the one or more bases consist of one or more dibasic and/or one or more tribasic salts, and more preferably of one or more dibasic salts.

In the case where the one or more bases comprise one or more polybasic salts, it is preferred that the one or more cations of the one or more polybasic salts is selected from the group consisting of alkali and alkaline earth metals, including mixtures and/or combinations of two or more thereof, more preferably from the group consisting of alkali metals, including mixtures and/or combinations of two or more thereof, more preferably from the group consisting of Li, Na, K, Rb, and Cs, including mixtures and/or combinations of two or more thereof,
more preferably from the group consisting of Li, Na, and K, including mixtures and/or combinations of two or more thereof,
wherein more preferably the one or more cations of the one or more polybasic salts is Na and/or K, preferably Na.

It is preferred that the one or more nickel containing compounds in (2) are one or more nickel salts, more preferably one or more Ni(ll) salts, wherein the anion of the one or more nickel salts is preferably selected from the group consisting of halides, carbonate, hydrogencarbonate, sulfate, hydrogensulfate, hydroxide, nitrate, phosphate, hydogenphosphate, dihydrogenphosphate, acetate, and combinations of two or more thereof,
more preferably from the group consisting of chloride, bromide, fluoride, hydrogencarbonate, hydrogensulfate, nitrate, dihydrogenphosphate, acetate, and combinations of two or more thereof,
more preferably from the group consisting of chloride, fluoride, nitrate, acetate, and combinations of two or more thereof,
wherein more preferably the anion of the one or more nickel salts is chloride and/or nitrate, preferably chloride,
and wherein more preferably the one or more nickel containing compounds comprise nickel(II) chloride, wherein more preferably the one or more nickel containing compounds is nickel(II) chloride.

It is preferred that the one or more aluminum containing compounds in (2) are one or more aluminum salts, wherein the anion of the one or more aluminum salts is preferably selected from the group consisting of halides, sulfate, hydroxide, nitrate, and combinations of two or more thereof,
more preferably from the group consisting of chloride, fluoride, sulfate, hydroxide, nitrate, and combinations of two or more thereof,
wherein more preferably the anion of the one or more aluminum salts is chloride and/or sulfate, preferably chloride,
and wherein more preferably the one or more aluminum containing compounds comprise aluminum chloride, wherein more preferably the one or more aluminum containing compounds is aluminum chloride.

It is preferred that the one or more silicon containing compounds in (3) are selected from the group consisting of silicates, more preferably from the group consisting of silicate salts, more preferably from the group consisting of alkali metal silicates and mixtures thereof, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na, and wherein more preferably the one or more silicon containing compounds comprise sodium silicate, wherein more preferably the one or more silicon containing compounds is sodium silicate.

It is preferred that the solution S3 prepared in (3) further comprises one or more bases, wherein the one or more bases are preferably selected from the group consisting of inorganic and organic bases, preferably from the group of inorganic bases, wherein preferably the one or more bases are selected from the group consisting of hydroxides, carbonates, aluminates, and mixtures of two or more thereof, more preferably from the group consisting of alkali metal hydroxides, alkali metal carbonates, alkali metal aluminates, and mixtures of two or more thereof, more preferably from the group consisting of alkali metal carbonates, alkali metal aluminates, and mixtures of two or more thereof, wherein more preferably the one or more bases comprise one or more alkali metal carbonates, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na.

In the case where the solution S3 prepared in (3) further comprises one or more bases, it is preferred that the concentration of the one or more bases is in the range of 0.01 to 10 mol/l, more preferably of from 0.05 to 5 mol/l, more preferably of from 0.1 to 3 mol/l, more preferably of from 0.3 to 2.5 mol/l, more preferably of from 0.5 to 2.1 mol/l, more preferably of from 0.8 to 1.8 mol/l, more preferably of from 1 to 1.6 mol/l, more preferably of from 1.2 to 1.4 mol/l, more preferably of from 1.25 to 1.35 mol/l, and more preferably of from 1.28 to 1.3 mol/l.

It is preferred that the one or more aluminum containing compounds in (4) are selected from the group consisting of aluminates, more preferably from the group consisting of aluminate salts, more preferably from the group consisting of alkali metal aluminates and mixtures thereof, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
and wherein more preferably the one or more aluminum containing compounds comprise sodium aluminate, wherein more preferably the one or more aluminum containing compounds is sodium aluminate.

It is preferred that the concentration of the one or more bases in (1) is in the range of from 0.005 to 1 mol/l, more preferably of from 0.01 to 0.7 mol/l, more preferably of from 0.03 to 0.5 mol/l, more preferably of from 0.05 to 0.3 mol/l, more preferably of from 0.08 to 0.2 mol/l, more preferably of from 0.1 to 0.15 mol/l, and more preferably of from 0.11 to 0.13 mol/l.

It is preferred that the concentration of the one or more nickel containing compounds in (2) is in the range of from 0.05 to 5 mol/l, more preferably of from 0.1 to 4 mol/l, more preferably of from 0.3 to 3 mol/l, more preferably of from 0.5to 2.5 mol/l, more preferably of from 0.8 to 2 mol/l, more preferably of from 1 to 1.8 mol/l, more preferably of from 1.2 to 1.5 mol/l, and more preferably of from 1.35 to 1.4 mol/l.

It is preferred that the concentration of the one or more aluminum containing compounds in (2) is in the range of from 0.001 to 0.5 mol/l, more preferably of from 0.005 to 0.3 mol/l, more preferably of from 0.01 to 0.2 mol/l, more preferably of from 0.03 to 0.15 mol/l, more preferably of from 0.04 to 0.1 mol/l, more preferably of from 0.05 to 0.08 mol/l, more preferably of from 0.055 to 0.075 mol/l, and more preferably of from 0.06 to 0.07 mol/l.

It is preferred that the concentration of the one or more silicon containing compounds in (3) is in the range of from 0.01 to 5 mol/l, more preferably of from 0.05 to 3 mol/l, more preferably of from 0.1 to 1.5 mol/l, more preferably of from 0.2 to 1 mol/l, more preferably of from 0.3 to 0.8 mol/l, more preferably of from 0.35 to 0.6 mol/l, more preferably of from 0.4 to 0.55 mol/l, and more preferably of from 0.45 to 0.5 mol/l.

It is preferred that the concentration of the one or more aluminum containing compounds in (4) is in the range of from 0.001 to 5 mol/l, more preferably of from 0.05 to 3 mol/l, more preferably of from 0.1 to 2 mol/l, more preferably of from 0.3 to 1.5 mol/l, more preferably of from 0.4 to 1 mol/l, more preferably of from 0.5 to 0.8 mol/l, more preferably of from 0.55 to 0.7 mol/l, and more preferably of from 0.6 to 0.65 mol/l.

In the case where the concentration of the one or more aluminum containing compounds in (4) is in the range of from 0.001 to 5 mol/l, it is preferred that the concentration of the one or more aluminum containing compounds in (2) is in the range of from 0.001 to 0.2 mol/l, more preferably of from 0.005 to 0.1 mol/l, more preferably of from 0.01 to 0.08 mol/l, more preferably of from 0.015 to 0.05 mol/l, more preferably of from 0.02 to 0.04 mol/l, and more preferably of from 0.025 to 0.035 mol/l.

It is preferred that the ratio S2 : S3 of the total volume of the solution S2 to the total volume of the solution S3 which are respectively fed into the solution S1 is comprised in the range of from 0.05 : 1 to 1 : 0.05, more preferably of from 0.1 : 1 to 1 : 0.1, more preferably of from 0.3 : 1 to 1 : 0.3, more preferably of from 0.5 : 1 to 1 : 0.5, more preferably of from 0.7 : 1 to 1 : 0.7, more preferably of from 0.8 : 1 to 1 : 0.8, and more preferably of from 0.9 : 1 to 1 : 0.9.

It is preferred that the ratio S2 : S3 : S4 of the total volume of the solution S2 to the total volume of the solution S3 to the total volume of the optional solution S4 which are respectively fed into the solution S1 is comprised in the range of from (0.05 to 20) : (0.05 to 20) : (0.0005 to 2), more preferably of from (0.1 to 10) : (0.1 to 10) : (0.001 to 1), more preferably of from (0.3 to 3) : (0.3 to 3) : (0.005 to 0.07), more preferably of from (0.5 to 2) : (0.5 to 2) : (0.01 to 0.05), more preferably of from (0.7 to 1.5) : (0.7 to 1.5) : (0.015 to 0.045), more preferably of from (0.8 to 1.3) : (0.8 to 1.3) : (0.02 to 0.04), and more preferably of from (0.9 to 1.1) : (0.9 to 1.1) : (0.025 to 0.035).

It is preferred that the ratio S2 : S1 of the total volume of the solution S2 to the total volume of the solution S1 into which it is fed is comprised in the range of from 0.01 to 5, more preferably of from 0.05 to 2, more preferably of from 0.1 to 1, more preferably of from 0.3 to 0.7, more preferably of from 0.4 to 0.55, and more preferably of from 0.45 to 0.5.

It is preferred that the ratio S3 : S1 of the total volume of the solution S2 to the total volume of the solution S1 into which it is fed is comprised in the range of from 0.01 to 5, more preferably of from 0.05 to 2, more preferably of from 0.1 to 1, more preferably of from 0.3 to 0.7, more preferably of from 0.4 to 0.55, and more preferably of from 0.45 to 0.5.

It is preferred that the ratio S4 : S1 of the total volume of the optional solution S4 to the total volume of the solution S1 into which it is fed is comprised in the range of from 0.0001 to 1, more preferably of from 0.0005 to 0.5, more preferably of from 0.001 to 0.1, more preferably of from 0.003 to 0.05, more preferably of from 0.005 to 0.03, more preferably of from 0.008 to 0.025, more preferably of from 0.01 to 0.02, and more preferably of from 0.013 to 0.017.

It is preferred that, independently of each other, the feeding of the solutions of S2, S3, and of the optional solution S4 in (5) is conducted for a duration comprised in the range of from 1 min to 24 h, more preferably of from 0.05 to 12 h, more preferably of from 0.1 to 6 h, more preferably of from 0.25 to 3 h, more preferably of from 0.5 to 1.5 h, and more preferably of from 0.75 to 1.25 h.

It is preferred that the feeding of solutions S2 and S3 and of optional solution S4 into solution S1 in (4) is conducted subsequently or simultaneously, more preferably simultaneously.

It is preferred that the feeding of solutions S2 and S3 into solution S1 in (4) is conducted under agitation of the solution S1, wherein the agitation of the solution S1 is more preferably achieved by stirring.

It is preferred that the solutions S1, S2, S3, and optional solution S4 are heated prior to the feeding of solutions S2 and S3 and optional solution S4 into solution S1 in (5), wherein the temperature to which the respective solutions are heated prior to feeding in (5) is comprised in the range of from 30 to 100°C, preferably of from 50 to 99°C, more preferably of from 60 to 98°C, more preferably of from 70 to 96°C, more preferably of from 75 to 94°C, more preferably of from 80 to 92°C, and more preferably of from 85 to 90°C.

It is preferred that during the feeding in (5) the resulting mixture is heated and maintained at a temperature comprised in the range of from 30 to 100°C, preferably of from 50 to 99°C, more preferably of from 60 to 98°C, more preferably of from 70 to 96°C, more preferably of from 75 to 94°C, more preferably of from 80 to 92°C, and more preferably of from 85 to 90°C.

The process may comprise further steps. It is preferred that the process further comprises
(7) washing the supported nickel catalyst precursor obtained in (6);
   and/or, preferably and
(8) drying the supported nickel catalyst precursor obtained in (6) or (7).

As disclosed above, the process may comprise further process steps. It is preferred that the process further comprises
(9) calcining the supported nickel catalyst precursor obtained in (6), (7), or (8), for obtaining a supported nickel catalyst precursor comprising a mixed oxide of NiO, SiO₂, and Al₂O₃.

In the case where the process further comprises (9), it is preferred that calcining in (9) is performed at a temperature in the range of from 200 to 900 °C, more preferably from 230 to 700 °C, more preferably from 250 to 600 °C, more preferably from 280 to 550 °C, more preferably from 300 to 500 °C, more preferably from 330 to 450 °C, more preferably from 350 to 400 °C, and more preferably from 370 to 380 °C.

Further in the case where the process further comprises (9), it is preferred that calcining in (9) is performed in an atmosphere containing air, wherein preferably calcining in (9) is performed in air.

Yet further, the present invention relates to a supported nickel catalyst precursor obtainable and/or obtained according to the process of any one of the embodiments disclosed herein.

Yet further, the present invention relates to a supported nickel catalyst precursor comprising a mixed oxide of NiO, SiO₂, and Al₂O₃, obtainable and/or obtained according to the process of any one of the particular and preferred embodiments disclosed herein which include a step of calcining the supported nickel catalyst precursor.

Yet further, the present invention relates to a process for the preparation of a supported nickel catalyst comprising
(i) providing a supported nickel catalyst precursor obtainable and/or obtained according to the process of any one of the embodiments disclosed herein;
(ii) reducing the supported nickel catalyst precursor provided in (i) in a hydrogen atmosphere for obtaining a supported nickel catalyst.

It is preferred that reduction in (ii) is conducted at a temperature in the range of from 200 to 500 °C, more preferably from 300 to 470 °C, more preferably from 350 to 450 °C, more preferably from 400 to 440 °C, and more preferably from 420 to 430 °C.

It is preferred that reduction in (ii) is conducted for a duration in the range of from 0.25 to 5 h, more preferably from 0.5 to 4 h, more preferably from 1 to 3.5 h, more preferably from 1.25 to 3 h, more preferably from 1.5 to 2.5 h, and more preferably from 1.75 to 2.25 h.

The process for the preparation of a supported nickel catalyst may comprise further process steps. It is preferred that the for the preparation of a supported nickel catalyst further comprises
(iii) passivating the supported nickel catalyst obtained in (ii) in an atmosphere comprising air, preferably in an atmosphere consisting of air.

It is preferred that passivation in (iii) is conducted at a temperature in the range of from 75 to 150 °C, more preferably from 80 to 130 °C, more preferably from 85 to 120 °C, more preferably from 90 to 110 °C, and more preferably from 95 to 105 °C.

It is preferred that passivation in (iii) is conducted for a duration in the range of from 0.25 to 4 h, more preferably from 0.5 to 3 h, more preferably from 0.75 to 2.5 h, more preferably from 1 to 2 h, and more preferably from 1.25 to 1.75 h.

Yet further, the present invention relates to a supported nickel catalyst obtainable and/or obtained according to the process of any one of the embodiments disclosed herein.

Yet further, the present invention relates to a process for the hydrogenation of aromatic compounds comprising
(A) preparing a mixture of one or more aromatic compounds and a supported nickel catalyst according to any one of the embodiments disclosed herein and/or a supported nickel catalyst precursor according to any one of the embodiments disclosed herein; and
(B) contacting the mixture obtained in (A) with hydrogen at a temperature comprised in the range of from 100 to 400 °C.

It is preferred that the aromatic compounds are selected from the group consisting of aromatic polymer compounds, more preferably from the group consisting of petrochemical resins, wherein more preferably the one or more aromatic compounds comprise the polymerization product of the C9 fraction obtained from the distillation of crude naphtha.

In the case where the aromatic compounds are selected from the group consisting of aromatic polymer compounds, it is preferred that the aromatic polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.

It is preferred that contacting in (B) is conducted at a temperature comprised in the range of from 150 to 350°C, more preferably of from 200 to 320°C, more preferably of from 230 to 300°C, more preferably of from 250 to 290°C, more preferably of from 260 to 280°C, and more preferably of from 265 to 275°C.

It is preferred that contacting in (B) is conducted for a duration in the range of from 0.1 to 10 h, more preferably of from 0.5 to 5 h, more preferably of from 1 to 3 h, more preferably of from 1.5 to 2.5 h, and more preferably of from 1.8 to 2.2 h.

It is preferred that contacting in (B) is conducted at a pressure comprised in the range of from 5 to 200 bar, more preferably of from 10 to 150 bar, more preferably of from 30 to 120 bar, more preferably of from 50 to 100 bar, more preferably of from 70 to 90 bar, and more preferably of from 75 to 85 bar.

It is preferred that contacting in (B) is conducted under agitation of the mixture, wherein the agitation of the mixture is preferably achieved by stirring.

It is preferred that the mixture prepared in (A) contains 0.01 to 5 wt.-% of the catalyst based on 100 wt.-% of the one or more aromatic compounds, more preferably of from 0.05 to 3 wt.-%, more preferably of from 0.1 to 2.5 wt.-%, more preferably of from 0.3 to 2.1 wt.-%, more preferably of from 0.5 to 1.8 wt.-%, more preferably of from 0.7 to 1.5 wt.-%, more preferably of from 0.8 to 1.3 wt.-%, and more preferably of from 0.9 to 1.1 wt.-%.

It is preferred that contacting in (B) is conducted under continuous and/or batch conditions, preferably under batch conditions.

Yet further, the present invention relates to a use of a supported nickel catalyst precursor according to any one of the embodiments disclosed herein and/or of a supported nickel catalyst according to any one of the embodiments disclosed herein in the hydrogenation of aromatic compounds, preferably of aromatic polymer compounds, more preferably of petrochemical resins, and more preferably of aromatic compounds which comprise the polymerization product of the C9 fraction obtained from the distillation of crude naphtha.

It is preferred that the aromatic polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.

The unit bar(abs) refers to an absolute pressure of 10⁵ Pa and the unit Angstrom refers to a length of 10⁻¹⁰ m.

The present invention is further illustrated by the following set of embodiments and combinations of embodiments resulting from the dependencies and back-references as indicated. In particular, it is noted that in each instance where a range of embodiments is mentioned, for example in the context of a term such as "The process of any one of embodiments 1 to 4", every embodiment in this range is meant to be explicitly disclosed for the skilled person, i.e. the wording of this term is to be understood by the skilled person as being synonymous to "The process of any one of embodiments 1, 2, 3, and 4". Further, it is explicitly noted that the following set of embodiments is not the set of claims determining the extent of protection, but represents a suitably structured part of the description directed to general and preferred aspects of the present invention.
1. A supported nickel catalyst precursor comprising Ni, Si, Al, and O, preferably obtainable and/or obtained according to the process of any one of embodiments 7 to 39, wherein the catalyst precursor displays a total intrusion volume in the range of from 2.5 to 6.5 ml/g, preferably of from 3 to 5.5 ml/g, more preferably of from 3.5 to 5 ml/g, more preferably of from 3.7 to 4.7 ml/g, more preferably of from 3.8 to 4.5 ml/g, more preferably of from 3.9 to 4.3 ml/g, and more preferably of from 4 to 4.2 ml/g,
   wherein the total intrusion volume is preferably determined according to Reference Example 1.
2. The catalyst precursor of embodiment 1, wherein the catalyst precursor displays a total pore volume in the range of from 0.5 to 2 cm³/g, preferably of from 0.6 to 1.8 cm³/g, more preferably of from 0.65 to 1.5 cm³/g, more preferably of from 0.7 to 1.3 cm³/g, more preferably of from 0.75 to 1.1 cm³/g, more preferably of from 0.8 to 1 cm³/g, more preferably of from 0.85 to 0.95 cm³/g, and more preferably of from 0.9 to 0.92 cm³/g,
   wherein the total pore volume is preferably determined according to Reference Example 2.
3. The catalyst precursor of embodiment 1 or 2, wherein the cumulative pore volume of the catalyst precursor for pore diameters of from 2 to 5 nm is in the range of from 0.1 to 0.5 cm³/g, preferably of from 0.13 to 0.4 cm³/g, more preferably of from 0.15 to 0.35 cm³/g, more preferably of from 0.18 to 0.32 cm³/g, more preferably of from 0.2 to 0.29 cm³/g, more preferably of from 0.22 to 0.27 cm³/g, and more preferably of from 0.24 to 0.25 cm³/g,
   wherein the cumulative pore volume is preferably determined according to Reference Example 2.
4. The catalyst precursor of any one of embodiments 1 to 3, wherein the cumulative pore volume of the catalyst precursor for pore diameters of from 2 to 60 nm is in the range of from 0.3 to 1.5, preferably of from 0.5 to 1.2, more preferably of from 0.55 to 1, more preferably of from 0.6 to 0.9, more preferably of from 0.65 to 0.85, more preferably of from 0.7 to 0.8, and more preferably of from 0.73 to 0.77,
   wherein the cumulative pore volume is preferably determined according to Reference Example 2.
5. The catalyst precursor of any one of embodiments 1 to 4, wherein the cumulative pore volume of the catalyst precursor for pore diameters of from 20 to 80 nm is in the range of from 0.15 to 0.7, preferably of from 0.18 to 0.55, more preferably of from 0.2 to 0.45, more preferably of from 0.23 to 0.4, more preferably of from 0.25 to 0.38, more preferably of from 0.28 to 0.35, and more preferably of from 0.31 to 0.33,
   wherein the cumulative pore volume is preferably determined according to Reference Example 2.
6. The catalyst precursor of any one of embodiments 1 to 5, wherein the BET surface area of the catalyst precursor is in the range of from 200 to 350 m²/g, preferably of from 230 to 320 m²/g, more preferably of from 250 to 300 m²/g, more preferably of from 260 to 285 m²/g, and more preferably of from 265 to 280 m²/g, wherein the BET surface area is preferably determined according to ISO 9277:2010.
7. A process for the preparation of a supported nickel catalyst precursor, preferably of the supported nickel catalyst precursor according to any one of the embodiments 1 to 6, comprising
   (1) preparing a first aqueous solution (S1) comprising one or more bases;
   (2) preparing a second aqueous solution (S2) comprising one or more nickel containing compounds and one or more aluminum containing compounds;
   (3) preparing a third aqueous solution (S3) comprising one or more silicon containing compounds;
   (4) optionally preparing a fourth aqueous solution (S4) comprising one or more aluminum containing compounds;
   (5) feeding solutions S2 and S3 and optional solution S4 into solution S1 for precipitating the supported nickel catalyst precursor, wherein the resulting mixture has a pH in the range of from 6.5 to 8.5;
   (6) isolating the supported nickel catalyst precursor from the mixture obtained in (5).
8. The process of embodiment 7, wherein the pH of the mixture resulting in (5) is in the range of from 6.9 to 8.1, preferably of from 7.1 to 7.9, more preferably of from 7.3 to 7.8, and more preferably of from 7.4 to 7.7.
9. The process of embodiment 7 or 8, wherein the one or more bases in (1) are selected from the group consisting of inorganic and organic bases, preferably from the group of inorganic bases, wherein preferably the one or more bases are selected from the group consisting of hydroxides, carbonates, aluminates, and mixtures of two or more thereof, more preferably from the group consisting of alkali metal hydroxides, alkali metal carbonates, alkali metal aluminates, and mixtures of two or more thereof,
   more preferably from the group consisting of alkali metal carbonates, alkali metal aluminates, and mixtures of two or more thereof,
   wherein the alkali metal is preferably selected from the group consisting of Li, Na, K, Rb, Cs, and mixtures of two or more thereof,
   more preferably from the group consisting of Li, Na, K, and mixtures of two or more thereof,
   wherein more preferably the alkali metal is Na and/or K, preferably Na,
   and wherein more preferably the one or more bases comprise sodium carbonate and/or sodium aluminate, preferably sodium carbonate, wherein more preferably the one or more bases are sodium carbonate and/or sodium aluminate, preferably sodium carbonate.
10. The process of any one of embodiments 7 to 9, wherein the one or more bases comprise one or more polybasic salts, preferably one or more polybasic salts selected from the group consisting of dibasic, tribasic, and tetrabasic salts, including mixtures of two or more thereof, more preferably from the group consisting of dibasic and tribasic salts, including mixtures of two or more thereof, wherein more preferably the one or more bases comprise one or more dibasic and/or one or more tribasic salts, and more preferably one or more dibasic salts, wherein more preferably the one or more bases consist of one or more dibasic and/or one or more tribasic salts, and more preferably of one or more dibasic salts.
11. The process of embodiment 10, wherein the one or more cations of the one or more polybasic salts is selected from the group consisting of alkali and alkaline earth metals, including mixtures and/or combinations of two or more thereof, preferably from the group consisting of alkali metals, including mixtures and/or combinations of two or more thereof, more preferably from the group consisting of Li, Na, K, Rb, and Cs, including mixtures and/or combinations of two or more thereof,
   more preferably from the group consisting of Li, Na, and K, including mixtures and/or combinations of two or more thereof,
   wherein more preferably the one or more cations of the one or more polybasic salts is Na and/or K, preferably Na.
12. The process of any one of embodiments 7 to 11, wherein the one or more nickel containing compounds in (2) are one or more nickel salts, preferably one or more Ni(II) salts, wherein the anion of the one or more nickel salts is preferably selected from the group consisting of halides, carbonate, hydrogencarbonate, sulfate, hydrogensulfate, hydroxide, nitrate, phosphate, hydogenphosphate, dihydrogenphosphate, acetate, and combinations of two or more thereof,
   more preferably from the group consisting of chloride, bromide, fluoride, hydrogencarbonate, hydrogensulfate, nitrate, dihydrogenphosphate, acetate, and combinations of two or more thereof,
   more preferably from the group consisting of chloride, fluoride, nitrate, acetate, and combinations of two or more thereof,
   wherein more preferably the anion of the one or more nickel salts is chloride and/or nitrate, preferably chloride,
   and wherein more preferably the one or more nickel containing compounds comprise nickel(II) chloride, wherein more preferably the one or more nickel containing compounds is nickel(II) chloride.
13. The process of any one of embodiments 7 to 12, wherein the one or more aluminum containing compounds in (2) are one or more aluminum salts, wherein the anion of the one or more aluminum salts is preferably selected from the group consisting of halides, sulfate, hydroxide, nitrate, and combinations of two or more thereof,
   more preferably from the group consisting of chloride, fluoride, sulfate, hydroxide, nitrate, and combinations of two or more thereof,
   wherein more preferably the anion of the one or more aluminum salts is chloride and/or sulfate, preferably chloride,
   and wherein more preferably the one or more aluminum containing compounds comprise aluminum chloride, wherein more preferably the one or more aluminum containing compounds is aluminum chloride.
14. The process of any one of embodiments 7 to 13, wherein the one or more silicon containing compounds in (3) are selected from the group consisting of silicates, preferably from the group consisting of silicate salts, more preferably from the group consisting of alkali metal silicates and mixtures thereof, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
   and wherein more preferably the one or more silicon containing compounds comprise sodium silicate, wherein more preferably the one or more silicon containing compounds is sodium silicate.
15. The process of any one of embodiments 7 to 14, wherein the solution S3 prepared in (3) further comprises one or more bases, wherein the one or more bases are preferably selected from the group consisting of inorganic and organic bases, preferably from the group of inorganic bases, wherein preferably the one or more bases are selected from the group consisting of hydroxides, carbonates, aluminates, and mixtures of two or more thereof, more preferably from the group consisting of alkali metal hydroxides, alkali metal carbonates, alkali metal aluminates, and mixtures of two or more thereof, more preferably from the group consisting of alkali metal carbonates, alkali metal aluminates, and mixtures of two or more thereof, wherein more preferably the one or more bases comprise one or more alkali metal carbonates, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na.
16. The process of embodiment 15, wherein the concentration of the one or more bases is in the range of 0.01 to 10 mol/l, preferably of from 0.05 to 5 mol/l, more preferably of from 0.1 to 3 mol/l, more preferably of from 0.3 to 2.5 mol/l, more preferably of from 0.5 to 2.1 mol/l, more preferably of from 0.8 to 1.8 mol/l, more preferably of from 1 to 1.6 mol/l, more preferably of from 1.2 to 1.4 mol/l, more preferably of from 1.25 to 1.35 mol/l, and more preferably of from 1.28 to 1.3 mol/l.
17. The process of any one of embodiments 7 to 16, wherein the one or more aluminum containing compounds in (4) are selected from the group consisting of aluminates, preferably from the group consisting of aluminate salts, more preferably from the group consisting of alkali metal aluminates and mixtures thereof, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
   and wherein more preferably the one or more aluminum containing compounds comprise sodium aluminate, wherein more preferably the one or more aluminum containing compounds is sodium aluminate.
18. The process of any one of embodiments 7 to 17, wherein the concentration of the one or more bases in (1) is in the range of from 0.005 to 1 mol/l, preferably of from 0.01 to 0.7 mol/l, more preferably of from 0.03 to 0.5 mol/l, more preferably of from 0.05 to 0.3 mol/l, more preferably of from 0.08 to 0.2 mol/l, more preferably of from 0.1 to 0.15 mol/l, and more preferably of from 0.11 to 0.13 mol/l.
19. The process of any one of embodiments 7 to 18, wherein the concentration of the one or more nickel containing compounds in (2) is in the range of from 0.05 to 5 mol/l, preferably of from 0.1 to 4mol/l, more preferably of from 0.3 to 3 mol/l, more preferably of from 0.5 to 2.5 mol/l, more preferably of from 0.8to 2 mol/l, more preferably of from 1 to 1.8 mol/l, more preferably of from 1.2 to 1.5 mol/l, and more preferably of from 1.35 to 1.4 mol/l.
20. The process of any one of embodiments 7 to 19, wherein the concentration of the one or more aluminum containing compounds in (2) is in the range of from 0.001 to 0.5 mol/l, preferably of from 0.005 to 0.3 mol/l, more preferably of from 0.01 to 0.2 mol/l, more preferably of from 0.03 to 0.15 mol/l, more preferably of from 0.04 to 0.1 mol/l, more preferably of from 0.05 to 0.08 mol/l, more preferably of from 0.055 to 0.075 mol/l, and more preferably of from 0.06 to 0.07 mol/l.
21. The process of any one of embodiments 7 to 20, wherein the concentration of the one or more silicon containing compounds in (3) is in the range of from 0.01 to 5 mol/l, preferably of from 0.05 to 3 mol/l, more preferably of from 0.1 to 1.5 mol/l, more preferably of from 0.2 to 1 mol/l, more preferably of from 0.3 to 0.8 mol/l, more preferably of from 0.35 to 0.6 mol/l, more preferably of from 0.4 to 0.55 mol/l, and more preferably of from 0.45 to 0.5 mol/l.
22. The process of any one of embodiments 7 to 21, wherein the concentration of the one or more aluminum containing compounds in (4) is in the range of from 0.001 to 5 mol/l, preferably of from 0.05 to 3 mol/l, more preferably of from 0.1 to 2 mol/l, more preferably of from 0.3 to 1.5 mol/l, more preferably of from 0.4 to 1 mol/l, more preferably of from 0.5 to 0.8 mol/l, more preferably of from 0.55 to 0.7 mol/l, and more preferably of from 0.6 to 0.65 mol/l.
23. The process of embodiment 22, wherein the concentration of the one or more aluminum containing compounds in (2) is in the range of from 0.001 to 0.2 mol/l, preferably of from 0.005 to 0.1 mol/l, more preferably of from 0.01 to 0.08 mol/l, more preferably of from 0.015 to 0.05 mol/l, more preferably of from 0.02 to 0.04 mol/l, and more preferably of from 0.025 to 0.035 mol/l.
24. The process of any one of embodiments 7 to 23, wherein the ratio S2 : S3 of the total volume of the solution S2 to the total volume of the solution S3 which are respectively fed into the solution S1 is comprised in the range of from 0.05 : 1 to 1 : 0.05, preferably of from 0.1 : 1 to 1 : 0.1, more preferably of from 0.3 : 1 to 1 : 0.3, more preferably of from 0.5 : 1 to 1 : 0.5, more preferably of from 0.7 : 1 to 1 : 0.7, more preferably of from 0.8 : 1 to 1 : 0.8, and more preferably of from 0.9 : 1 to 1 : 0.9.
25. The process of any one of embodiments 7 to 24, wherein the ratio S2 : S3 : S4 of the total volume of the solution S2 to the total volume of the solution S3 to the total volume of the optional solution S4 which are respectively fed into the solution S1 is comprised in the range of from (0.05 to 20) : (0.05 to 20) : (0.0005 to 2), preferably of from (0.1 to 10) : (0.1 to 10) : (0.001 to 1), more preferably of from (0.3 to 3) : (0.3 to 3) : (0.005 to 0.07), more preferably of from (0.5 to 2) : (0.5 to 2) : (0.01 to 0.05), more preferably of from (0.7 to 1.5) : (0.7 to 1.5): (0.015 to 0.045), more preferably of from (0.8 to 1.3) : (0.8 to 1.3) : (0.02 to 0.04), and more preferably of from (0.9 to 1.1): (0.9 to 1.1): (0.025 to 0.035).
26. The process of any one of embodiments 7 to 25, wherein the ratio S2 : S1 of the total volume of the solution S2 to the total volume of the solution S1 into which it is fed is comprised in the range of from 0.01 to 5, preferably of from 0.05 to 2, more preferably of from 0.1 to 1, more preferably of from 0.3 to 0.7, more preferably of from 0.4 to 0.55, and more preferably of from 0.45 to 0.5.
27. The process of any one of embodiments 7 to 26, wherein the ratio S3 : S1 of the total volume of the solution S2 to the total volume of the solution S1 into which it is fed is comprised in the range of from 0.01 to 5, preferably of from 0.05 to 2, more preferably of from 0.1 to 1, more preferably of from 0.3 to 0.7, more preferably of from 0.4 to 0.55, and more preferably of from 0.45 to 0.5.
28. The process of any one of embodiments 7 to 27, wherein the ratio S4 : S1 of the total volume of the optional solution S4 to the total volume of the solution S1 into which it is fed is comprised in the range of from 0.0001 to 1, preferably of from 0.0005 to 0.5, more preferably of from 0.001 to 0.1, more preferably of from 0.003 to 0.05, more preferably of from 0.005 to 0.03, more preferably of from 0.008 to 0.025, more preferably of from 0.01 to 0.02, and more preferably of from 0.013 to 0.017.
29. The process of any one of embodiments 7 to 28, wherein, independently of each other, the feeding of the solutions of S2, S3, and of the optional solution S4 in (5) is conducted for a duration comprised in the range of from 1 min to 24 h, preferably of from 0.05 to 12 h, more preferably of from 0.1 to 6 h, more preferably of from 0.25 to 3 h, more preferably of from 0.5 to 1.5 h, and more preferably of from 0.75 to 1.25 h.
30. The process of any one of embodiments 7 to 29, wherein the feeding of solutions S2 and S3 and of optional solution S4 into solution S1 in (4) is conducted subsequently or simultaneously, preferably simultaneously.
31. The process of any one of embodiments 7 to 30, wherein the feeding of solutions S2 and S3 into solution S1 in (4) is conducted under agitation of the solution S1, wherein the agitation of the solution S1 is preferably achieved by stirring.
32. The process of any one of embodiments 7 to 31, wherein the solutions S1, S2, S3, and optional solution S4 are heated prior to the feeding of solutions S2 and S3 and optional solution S4 into solution S1 in (5), wherein the temperature to which the respective solutions are heated prior to feeding in (5) is comprised in the range of from 30 to 100°C, preferably of from 50 to 99°C, more preferably of from 60 to 98°C, more preferably of from 70 to 96°C, more preferably of from 75 to 94°C, more preferably of from 80 to 92°C, and more preferably of from 85 to 90°C.
33. The process of any one of embodiments 7 to 32, wherein during the feeding in (5) the resulting mixture is heated and maintained at a temperature comprised in the range of from 30 to 100°C, preferably of from 50 to 99°C, more preferably of from 60 to 98°C, more preferably of from 70 to 96°C, more preferably of from 75 to 94°C, more preferably of from 80 to 92°C, and more preferably of from 85 to 90°C.
34. The process of any one of embodiments 7 to 33, wherein the process further comprises (7) washing the supported nickel catalyst precursor obtained in (6);
   and/or, preferably and
   (8) drying the supported nickel catalyst precursor obtained in (6) or (7).
35. The process of any one of embodiments 7 to 34, wherein the process further comprises (9) calcining the supported nickel catalyst precursor obtained in (6), (7), or (8), for obtaining a supported nickel catalyst precursor comprising a mixed oxide of NiO, SiO₂, and Al₂O₃.
36. The process of embodiment 35, wherein calcining in (9) is performed at a temperature in the range of from 200 to 900°C, preferably from 230 to 700°C, more preferably from 250 to 600°C, more preferably from 280 to 550°C, more preferably from 300 to 500°C, more preferably from 330 to 450°C, more preferably from 350 to 400°C, and more preferably from 370 to 380°C.
37. The process of embodiment 35 or 36, wherein calcining in (9) is performed in an atmosphere containing air, wherein preferably calcining in (9) is performed in air.
38. A supported nickel catalyst precursor obtainable and/or obtained according to the process of any one of embodiments 7 to 37.
39. A supported nickel catalyst precursor comprising a mixed oxide of NiO, SiO₂, and Al₂O₃, obtainable and/or obtained according to the process of any one of embodiments 35 to 37.
40. A process for the preparation of a supported nickel catalyst comprising
   (i) providing a supported nickel catalyst precursor according to embodiment 39;
   (ii) reducing the supported nickel catalyst precursor provided in (i) in a hydrogen atmosphere for obtaining a supported nickel catalyst.
41. The process of embodiment 40, wherein reduction in (ii) is conducted at a temperature in the range of from 200 to 500 °C, more preferably from 300 to 470 °C, more preferably from 350 to 450 °C, more preferably from 400 to 440 °C, and more preferably from 420 to 430 °C.
42. The process of embodiment 40 or 41, wherein reduction in (ii) is conducted for a duration in the range of from 0.25 to 5 h, preferably from 0.5 to 4 h, more preferably from 1 to 3.5 h, more preferably from 1.25 to 3 h, more preferably from 1.5 to 2.5 h, and more preferably from 1.75 to 2.25 h.
43. The process of any one of embodiments 40 to 42, wherein the process further comprises (iii) passivating the supported nickel catalyst obtained in (ii) in an atmosphere comprising air, preferably in an atmosphere consisting of air.
44. The process of embodiment 43, wherein passivation in (iii) is conducted at a temperature in the range of from 75 to 150 °C, preferably from 80 to 130 °C, more preferably from 85 to 120 °C, more preferably from 90 to 110 °C, and more preferably from 95 to 105 °C.
45. The process of embodiment 44, wherein passivation in (iii) is conducted for a duration in the range of from 0.25 to 4 h, preferably from 0.5 to 3 h, more preferably from 0.75 to 2.5 h, more preferably from 1 to 2 h, and more preferably from 1.25 to 1.75 h.
46. A supported nickel catalyst obtainable and/or obtained according to the process of any one of embodiments 40 to 45.
47. A process for the hydrogenation of aromatic compounds comprising
   (A) preparing a mixture of one or more aromatic compounds and a catalyst according to embodiment 46 and/or a catalyst precursor according to any one of embodiments 1 to 6, 38, and 39; and
   (B) contacting the mixture obtained in (A) with hydrogen at a temperature comprised in the range of from 100 to 400°C.
48. The process of embodiment 47, wherein the aromatic compounds are selected from the group consisting of aromatic polymer compounds, preferably from the group consisting of petrochemical resins, wherein more preferably the one or more aromatic compounds comprise the polymerization product of the C9 fraction obtained from the distillation of crude naphtha.
49. The process of embodiment 48, wherein the aromatic polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.
50. The process of any one of embodiments 47 to 49, wherein contacting in (B) is conducted at a temperature comprised in the range of from 150 to 350°C, preferably of from 200 to 320°C, more preferably of from 230 to 300°C, more preferably of from 250 to 290°C, more preferably of from 260 to 280°C, and more preferably of from 265 to 275°C.
51. The process of any one of embodiments 47 to 50, wherein contacting in (B) is conducted for a duration in the range of from 0.1 to 10 h, preferably of from 0.5 to 5 h , more preferably of from 1 to 3 h, more preferably of from 1.5 to 2.5 h, and more preferably of from 1.8 to 2.2 h.
52. The process of any one of embodiments 47 to 51, wherein contacting in (B) is conducted at a pressure comprised in the range of from 5 to 200 bar, preferably of from 10 to 150 bar, more preferably of from 30 to 120 bar, more preferably of from 50 to 100 bar, more preferably of from 70 to 90 bar, and more preferably of from 75 to 85 bar.
53. The process of any one of embodiments 47 to 52, wherein contacting in (B) is conducted under agitation of the mixture, wherein the agitation of the mixture is preferably achieved by stirring.
54. The process of any one of embodiments 47 to 53, wherein the mixture prepared in (A) contains 0.01 to 5 wt.-% of the catalyst precursor based on 100 wt.-% of the one or more aromatic compounds, preferably of from 0.05 to 3 wt.-%, more preferably of from 0.1 to 2.5 wt.-%, more preferably of from 0.3 to 2.1 wt.-%, more preferably of from 0.5 to 1.8 wt.-%, more preferably of from 0.7 to 1.5 wt.-%, more preferably of from 0.8 to 1.3 wt.-%, and more preferably of from 0.9 to 1.1 wt.-%.
55. The process of any one of embodiments 47 to 54, wherein contacting in (B) is conducted under continuous and/or batch conditions, preferably under batch conditions.
56. Use of a supported nickel catalyst according to embodiment 46 and/or of a supported nickel catalyst precursor according to any one of embodiments 1 to 6, 38, and 39 in the hydrogenation of aromatic compounds, preferably of aromatic polymer compounds, more preferably of petrochemical resins, and more preferably of aromatic compounds which comprise the polymerization product of the C9 fraction obtained from the distillation of crude naphtha.
57. The use of embodiment 56, wherein the aromatic polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.

### EXPERIMENTAL SECTION

The present invention is further illustrated by the following examples and reference examples.

### Reference Example 1: Determination of the total pore volume via Hg intrusion

The total pore volume was determined via intrusion mercury porosimetry according to standard ASTM D 4284-12.

### Reference Example 2: Determination of the pore volume via N₂ adsorption

The total pore volume is determined by nitrogen adsorption from the BJH method, preferably according to DIN 66134 or ASTM D4641-12.

### Reference Example 3: Determination of the pH

The pH was measured with pH 3310 pH meter from WTW. Prior to each usage, the pH electrode was calibrated at room temperature using standard solutions for calibration with pH=7 and pH=10 respectively. The pH of starting solutions was measured at room temperature. To monitor the pH curve during the synthesis, pH was measured continuously, pH values being recorded every minute, at the conditions corresponding to the co-precipitation conditions (T=90 °C). The temperature dependence of the pH values is taken into consideration.

### Reference Example 4: HAC determination

The hydrogen adsorption capacity (HAC) is a common measure to determine the level of nickel surface area available for catalysis. The catalyst of the invention typically has a HAC ranging from 24 to 32 ml H₂/g catalyst.

The HAC of the catalyst was measured using Autochem 2920 from Micromeritics. For a typical procedure 0.2 g of catalyst was used. The HAC is determined by the amount of hydrogen desorbed while ramping up the temperature from -75 °C to 700 °C with a rate of 10 °C/min under argon atmosphere.

### Reference Example 5: Preparation of a hydrogenation catalyst precursor

The catalytically active phase of a hydrogenation catalyst is typically elemental Ni. In order to obtain a highly dispersed catalyst, the catalytically active phase is typically supported on an oxidic carrier, e. g. a combined SiO₂-Al₂O₃ support.

The coprecipitation was conducted in a stirred tank reactor with baffles to obtain mixing to minimize concentration differences in the vessel as variations in concentration could result in in homogeneous products. The vessel can be heated to a desired temperature. The stirred tank initially contained a water/support (precursor) solution, termed as "heel". Two different streams of liquids were then added to the vessel simultaneously at required flow rates using Gilson pumps. In one stream a metal solution was pumped to the vessel and in the other a support solution.
For example, a Ni hydrogenation catalyst precursor (also designated herein as NiO/SiO₂-Al₂O₃) can be prepared by coprecipitation of insoluble Ni salt and/or hydroxide from a NiCl₂ solution with NaSiO₃ · 6H₂O, NaAlO₂ and soda (Na₂CO₃), providing NaAlO₂ and soda as heel, the acid stream (stream 1) comprising NiCl₂ and the base stream (stream 2) comprising NaSiO₃ · 6H₂O and soda.

### Example 1: Preparation of a supported nickel catalyst

The setting according to Reference Example 3 was applied whereby the following conditions were applied. A typical precipitation preparation was performed applying the following parameters, conditions and characteristics:
- A heel was provided by mixing 1600 ml water with 46.5 g NaAlO₂ solution (NaAlO₂ concentration = 51.6 g/kg)
- The heel was heated to a temperature of 90 °C and stirred at 450 rpm.
- Stream 1 was provided by preparing a metal precursor solution comprising 132.2 g of NiCl₂, 5.4 g AlCl₃ · 6 H₂O, and 750 ml water.
- Stream 2 was provided by preparing a support precursor solution comprising 74 g Na₂SiO₃ · 5 H₂O, 102.5 g Na₂CO₃, and 750 ml water.

The streams were added simultaneously to the heel, within a period of 1 hour and at a temperature of 90 °C. The final pH was in the range from 7.0 to 8.5.

After the precipitation (addition of solutions), thus, after about 1 hour, the slurry was transferred to the filtration and washing unit. The total volume of the slurry after the precipitation was 3000 ml. After the filtration, washing (with about 40-60 L of H₂O) and drying (overnight at 100 °C), the amount solid material was about 120 g.

The obtained product - calcined at 375 °C in static air (5 °C/min, 1.5 hours) - had a BET specific surface area of 305 m²/g, a total pore volume of 0.72 cm³/g, a cumulative pore volume of the catalyst precursor for pore diameters of from 2 to 5 nm of 0.28 cm³/g, a cumulative pore volume of the catalyst precursor for pore diameters of from 2 to 60 nm of 0.61, a cumulative pore volume of the catalyst precursor for pore diameters of from 20 to 80 nm of 0.20 cm³/g. Further, the obtained product had a total intrusion volume of 3.7 ml/g.

The dried solid material was activated with hydrogen at 425 °C for two hours and subsequently passivated if necessary.

The resulting supported nickel catalyst had a hydrogen adsorption capacity of 26.2 ml H2/g catalyst. The reaction rate constant for the catalyst hydrogenating the hydrocarbon resin (RRH) was determined as being 1.362 h⁻¹. The activity of the catalyst was 100 %.

### Example 2: Preparation of a hydrogenation catalyst

The setting according to Reference Example 3 was applied whereby the following conditions were applied. 750 ml of aqueous solution containing NiCl₂ (132.2 g) and AlCl₃ (11.6 g), and 750 ml of aqueous solution containing sodium metasilicate (74.1 g) and sodium carbonate (102.5 g), were simultaneously pumped into a well-stirred (450 rpm) precipitation vessel at 90 °C for 1 hour. The starting solution in the precipitation vessel (heel) consisted of 1600 ml aqueous solution of sodium carbonate (20 g). The final pH was in the range from 7.0 to 8.5.

After the precipitation (addition of solutions), thus, after about 1 hour, the slurry was transferred to the filtration and washing unit. The total volume of the slurry after the precipitation was 3000 ml. After the filtration, washing (with about 40-60 L of H₂O) and drying (overnight at 100 °C), the amount solid material was about 120 g.

The obtained product - calcined at 375 °C in static air (5 °C/min;1.5 hours) - had a BET specific surface area of 266 m²/g, a total pore volume of 0.91 cm³/g, a cumulative pore volume of the catalyst precursor for pore diameters of from 2 to 5 nm of 0.25 cm³/g, a cumulative pore volume of the catalyst precursor for pore diameters of from 2 to 60 nm of 0.80, a cumulative pore volume of the catalyst precursor for pore diameters of from 20 to 80 nm of 0.31 cm³/g. Further, the obtained product had a total intrusion volume of 4.1 ml/g.

The dried solid material was activated with hydrogen at 425 °C for two hours and subsequently passivated if necessary.

The resulting supported nickel catalyst had a hydrogen adsorption capacity of 31.5 ml H₂/g catalyst. The reaction rate constant for the catalyst hydrogenating the hydrocarbon resin (RRH) was determined as being 1.58 h⁻¹. The activity of the catalyst was 116 %.

### Comparative Example 3: Preparation of a hydrogenation catalyst

The setting according to Reference Example 3 was applied whereby the following conditions were applied. 750 ml of aqueous solution containing NiCl₂ (132.2 g), and 750 ml of aqueous solution containing sodium metasilicate (74.1 g) and sodium carbonate (102.5 g), were simultaneously pumped into a well-stirred (450 rpm) precipitation vessel at 90°C for 1 hour. The starting solution in the precipitation vessel (heel) consisted of 1600 ml aqueous solution of sodium aluminate (11.7 g, concentration 51.2 g/kg). The final pH was in the range from 7.0 to 8.5.

After the precipitation (addition of solutions), thus, after about 1 hour, the slurry was transferred to the filtration and washing unit. The total volume of the slurry after the precipitation was 3000 ml. After the filtration, washing (with about 40-60 L of H₂O) and drying (overnight at 100 °C), the amount solid material was about 120 g.

The obtained product - calcined at 375 °C in static air (5 °C/min; 1.5 hours) - had a BET specific surface area of 420 m²/g, a total pore volume of 0.43 cm³/g, a cumulative pore volume of the catalyst precursor for pore diameters of from 2 to 5 nm of 0.38 cm³/g, a cumulative pore volume of the catalyst precursor for pore diameters of from 2 to 60 nm of 0.42, a cumulative pore volume of the catalyst precursor for pore diameters of from 20 to 80 nm of 0.02 cm³/g. Further, the obtained product had a total intrusion volume of 2.0 ml/g.

Dried solid material was activated with hydrogen at 425 °C for two hours and passivated if necessary.

The thus obtained activated material had a hydrogen adsorption capacity of 29.3 ml H2/g catalyst. The reaction rate constant for the activated material hydrogenating the hydrocarbon resin (RRH) was determined as being 1.032 h⁻¹. The activity of the activated material was 76 %.

### Example 4: Preparation of a hydrogenation catalyst

The setting according to Reference Example 3 was applied whereby the following conditions were applied. 750 ml of aqueous solution containing NiCl₂ (132.2 g) and AlCl₃ (5.4 g), and 750 ml of aqueous solution containing sodium metasilicate (74.1 g) and sodium carbonate (102.5 g), and third-stream containing sodium aluminate solution (23.3 g solution, concentration 51.6 g/kg), were simultaneously pumped into a well-stirred (450 rpm) precipitation vessel at 90°C for 1 hour. The starting solution in the precipitation vessel (heel) consisted of 1600 ml aqueous solution of soda (20 g).

After the precipitation (addition of solutions), thus, after about 1 hour, the slurry was transferred to the filtration and washing unit. The total volume of the slurry after the precipitation was 3000 ml. After the filtration, washing (with about 40-60 L of H₂O) and drying (overnight at 100 °C), the amount solid material was about 120 g.

The obtained product - calcined at 375 °C in static air (5 °C/min; 1.5 hours) - had a BET specific surface area of 280 m²/g, a total pore volume of 0.91 cm³/g, a cumulative pore volume of the catalyst precursor for pore diameters of from 2 to 5 nm of 0.24 cm³/g, a cumulative pore volume of the catalyst precursor for pore diameters of from 2 to 60 nm of 0.71, a cumulative pore volume of the catalyst precursor for pore diameters of from 20 to 80 nm of 0.33 cm³/g. Further, the obtained product had a total intrusion volume of 4.1 ml/g.

Dried solid material was activated with hydrogen at 425 °C for two hours and passivated if necessary.

The thus obtained activated material had a hydrogen adsorption capacity of 29.4 ml H₂/g catalyst. The reaction rate constant for the activated material hydrogenating the hydrocarbon resin (RRH) was determined as being 1.529 h⁻¹. The activity of the activated material was 112 %.

### Comparative Example 5: Preparation of a hydrogenation catalyst precursor according to the prior art

Comparative Example 5 was prepared according to Example 2 described in patent EP 1237651 B1.

The obtained product - calcined at 375 °C in static air (5 °C/min, 1.5 hours) - had a BET specific surface area of 283 m²/g, a total pore volume of 0.46 cm³/g, a cumulative pore volume of the catalyst precursor for pore diameters of from 2 to 5 nm of 0.24 cm³/g, a cumulative pore volume of the catalyst precursor for pore diameters of from 2 to 60 nm of 0.53, a cumulative pore volume of the catalyst precursor for pore diameters of from 20 to 80 nm of 0.18 cm³/g. Further, the obtained product had a total intrusion volume of 2.2 ml/g.

The obtained product had a hydrogen adsorption capacity of 24.4 ml H₂/g catalyst. The reaction rate constant for the obtained product hydrogenating the hydrocarbon resin (RRH) was determined as being 0.679 h⁻¹. The activity of said product was 50 %.

### Example 6: Catalytic testing

The hydrogenation catalyst precursors of Examples 1, 2 and 4 and Comparative Examples 3 and 5 were tested according to following procedure.

Hydrogenation tests were performed in a batch type reactor HP-9 using a high Sulphur C9-resin as feed (Sulphur content was 125 ppm). The activity of the samples was compared against a commercially available Ni 5338 P catalyst. The conditions for a standard test were:
agitation: 1100 rpm;
pressure: 80 bar;
temperature: 270 °C;
feed: 75 g resin / 75 g Exxsol D40;
runtime: 2 hours;
catalyst loading: 1.0 % on dry resin base.

The reaction rate of the catalyst hydrogenating the hydrocarbon resin (RRH) is expressed by the reaction rate constant, which is obtained from performing a linear regression between 0% and 30% conversion, and is expressed in 1/ h after 2 hours of hydrogenation. The hydrogenation activity was calculated by normalizing RRH of catalysts by RRH of example 1.

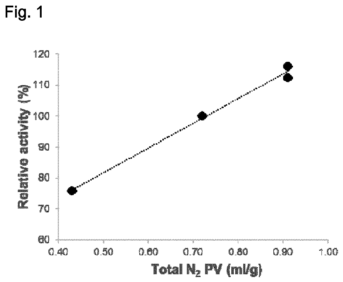

As can be seen from Figures 1 to 3, it has surprisingly been found that the catalytic activity is correlated to the total intrusion volume, and in particular to the mesopore volume created by pores having an average pore size comprised in the range of from 200 to 800 Angstroms. An overview of some relevant characteristics of the hydrogenation catalyst precursors of Examples 1, 2 and 4 and Comparative Examples 3 and 5 are given in table 1 below, wherein the reaction rate of the catalyst hydrogenating the hydrocarbon resin (RRH) is expressed by the reaction rate constant, which is obtained from performing a linear regression between 0% and 30% conversion, and is expressed in 1/ h (after 2 hours the hydrogenation process is finished). The activity of a catalyst precursor in accordance with Example 1 was 100 %. It can be gathered from said results that the catalyst precursors according to Examples 2 and 4 both having a higher total intrusion volume of 4.1, show higher activity in the hydrogenation reaction according to Example 6 compared to the catalyst precursor according to Example 1. The catalyst precursor according to Comparative Example 3 which has a total pore volume of 0.43 shows a comparatively low activity as well as a catalyst precursor according to the prior art in accordance with Comparative Example 5.

### DESCRIPTION OF THE FIGURES

- Figure 1:: displays the relative activity of the catalyst precursors in accordance to Examples 1, 2 and 4, and Comparative Example 3 in relation to the total pore volume as determined via Reference Example 2. The total pore volume is shown on the abscissa and the relative activity is shown on the ordinate in %, whereby the activity of the catalyst precursors in accordance with Example 1 was set to 100 %.

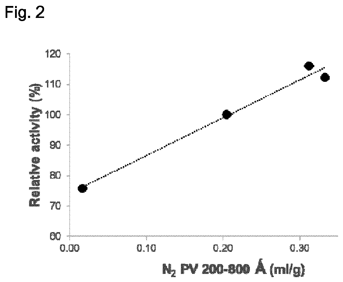

- Figure 2:: displays the relative activity of the catalyst precursors in accordance to Examples 1, 2 and 4, and Comparative Example 3 in relation to the total pore volume as determined via Reference Example 1. The total pore volume is shown on the abscissa and the relative activity is shown on the ordinate in %, whereby the activity of the catalyst precursor in accordance with Example 1 was set to 100 %.

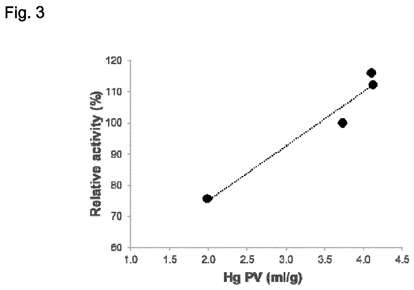

- Figure 3:: displays the relative activity of the catalyst precursors in accordance to Examples 1, 2 and 4, and Comparative Example 3 in relation to the total pore volume as determined via Reference Example 1. The total pore volume is shown on the abscissa and the relative activity is shown on the ordinate in %, whereby the activity of the catalyst precursor in accordance with Example 1 was set to 100 %.

### CITED LITERATURE

- WO 01/36093 A1
- WO 2004/035204
- US 9,045,410
- WO 2015/008247 A2

## Claims

1. A supported nickel catalyst precursor comprising Ni, Si, Al, O wherein the catalyst precursor displays a total intrusion volume in the range of from 2.5 to 6.5 ml/g, wherein the total intrusion volume is determined according to Reference Example 1.

2. The catalyst precursor of claim 1, wherein the catalyst precursor displays a total pore volume in the range of from 0.5 to 2 cm³/g, wherein the total pore volume is determined according to Reference Example 2.

3. The catalyst precursor of claim 1 or 2, wherein the cumulative pore volume of the catalyst for pore diameters of from 20 to 80 nm is in the range of from 0.15 to 0.7, wherein the cumulative pore volume is determined according to Reference Example 2.

4. The catalyst precursor of any one of claims 1 to 3, wherein the BET surface area of the catalyst is in the range of from 200 to 350 m²/g, wherein the BET surface area is determined according to ISO 9277:2010.

5. A process for the preparation of a supported nickel catalyst precursor comprising
(1) preparing a first aqueous solution (S1) comprising one or more bases;
(2) preparing a second aqueous solution (S2) comprising one or more nickel containing compounds and one or more aluminum containing compounds;
(3) preparing a third aqueous solution (S3) comprising one or more silicon containing compounds;
(4) optionally preparing a fourth aqueous solution (S4) comprising one or more aluminum containing compounds;
(5) feeding solutions S2 and S3 and optional solution S4 into solution S1 for precipitating the supported nickel catalyst, wherein the resulting mixture has a pH in the range of from 6.5 to 8.5;
(6) isolating the supported nickel catalyst precursor from the mixture obtained in (5).

6. The process of claim 5, wherein the ratio S2 : S3 of the total volume of the solution S2 to the total volume of the solution S3 which are respectively fed into the solution S1 is comprised in the range of from 0.05 : 1 to 1 : 0.05.

7. The process of claim 5 or 6, wherein the ratio S2 : S1 of the total volume of the solution S2 to the total volume of the solution S1 into which it is fed is comprised in the range of from 0.01 to 5.

8. The process of any one of claims 5 to 7, wherein the ratio S3 : S1 of the total volume of the solution S2 to the total volume of the solution S1 into which it is fed is comprised in the range of from 0.01 to 5.

9. The process of any one of claims 5 to 8, wherein process further comprises
(7) washing the supported nickel catalyst precursor obtained in (6);
and/or, preferably and
(8) drying the supported nickel catalyst precursor obtained in (6) or (7); and
(9) calcining the supported nickel catalyst precursor obtained in (6), (7), or (8), for obtaining a supported nickel catalyst precursor comprising a mixed oxide of NiO, SiO₂, and Al₂O₃.

10. A supported nickel catalyst precursor obtainable and/or obtained according to the process of any one of claims 5 to 9.

11. A supported nickel catalyst precursor comprising a mixed oxide of NiO, SiO₂, and Al₂O₃, obtainable and/or obtained according to the process of claim 9.

12. A process for the preparation of a supported nickel catalyst comprising
(i) providing a supported nickel catalyst precursor according to claim 11;
(ii) reducing the supported nickel catalyst precursor provided in (i) in a hydrogen atmosphere for obtaining a supported nickel catalyst.

13. A supported nickel catalyst obtainable and/or obtained according to the process of claim 12.

14. A process for the hydrogenation of aromatic compounds comprising
(A) preparing a mixture of one or more aromatic compounds and a supported nickel catalyst precursor according to any one of claims 1 to 4 and 9, or a supported nickel catalyst according to claim 13; and
(B) contacting the mixture obtained in (A) with hydrogen at a temperature comprised in the range of from 100 to 400°C.

15. Use of a supported nickel catalyst precursor according to any one of claims 1 to 4 and 9, or of a supported nickel catalyst according to claim 13, in the hydrogenation of aromatic compounds.
